# EUROPÄISCHE PATENTANMELDUNG

(11) **EP 3 009 681 A1**
(43) Veröffentlichungstag der Anmeldung: **20.04.2016**
(21) Anmeldenummer: 14188944.4
(22) Anmeldetag: 15.10.2014
(51) Int. Cl.: F04D 15/00, B28D 7/02, B23Q 11/10

(54) **Aktive und passive Selbstentleerung einer selbstansaugenden Wasserpumpe**

(71) Anmelder: HILTI Aktiengesellschaft, 9494 Schaan (LI)
(72) Erfinder: Specht, Helmut, 86825 Bad Wörishofen (DE)
(74) Vertreter: Hilti Aktiengesellschaft Corporate Intellectual Property

(57) **Zusammenfassung**

Wasserversorgungsvorrichtung zur Wasserversorgung einer Werkzeugmaschine, enthaltend eine Wasserpumpe, eine Wasserspeichereinrichtung, eine Ansaugleitung, eine Versorgungsleitung und eine Ventileinrichtung, welche reversibel mindestens in eine erste und eine zweite Position einstellbar ist.

Die Wasserpumpe ist in einer Richtung hinter der Ventileinrichtung positioniert. Eine erste Verbindungsleitung, eine zweite Verbindungsleitung sowie eine Rückführleitung sind vorgesehen. Wobei in der ersten Position die erste Verbindungsleitung, die zweite Verbindungsleitung sowie die Rückführleitung so miteinander in Verbindung stehen, dass Wasser von der Wasserpumpe, von der ersten Verbindungsleitung, von der zweiten Verbindungsleitung, von wenigstens einem Teil der Ansaugleitung und von wenigstens einem Teil der Versorgungsleitung in die Rückführleitung förderbar ist und wobei in der zweiten Position die erste Verbindungsleitung, die zweite Verbindungsleitung sowie die Rückführleitung nicht miteinander verbunden sind.

Verwendung einer Ventileinrichtung in einer Wasserversorgungsvorrichtung. Verfahren zum Steuern einer Wasserversorgungsvorrichtung.

## Beschreibung

Die vorliegende Erfindung bezieht sich auf eine Wasserversorgungsvorrichtung zur Versorgung einer Werkzeugmaschine mit Wasser, enthaltend eine Wasserpumpe, eine Speichereinrichtung zum Speichern von Wasser, eine Ansaugleitung zum Leiten von Wasser aus der Speichereinrichtung zu der Wasserpumpe, eine Versorgungsleitung zum Leiten von Wasser von der Wasserpumpe zu der Werkzeugmaschine und eine Ventileinrichtung, welche reversibel mindestens in eine erste Position und eine zweite Position einstellbar ist.

Wasserversorgungsvorrichtung dienen dazu, eine Werkzeugmaschine ausreichend mit Wasser zu versorgen. Für gewöhnlich handelt es sich bei solchen Werkzeugmaschinen um eine Kernbohrmaschine oder eine mit Diamanten besetzte Wandsäge. Kernbohrmaschinen und diamantbesetzte Wandsägen werden üblicherweise dazu verwendet, um einen mineralischen Werkstoff, wie beispielsweise Mauerwerk oder Gestein, zu bearbeiten bzw. zu zersägen. Bei derartigen Werkzeugmaschinen ist aufgrund der Wärme- und Staubentwicklung während des Betriebs eine ausreichende Versorgung mit Wasser unabdingbar. Das Wasser dient zum einen dazu, die Werkzeugmaschine sowie das von der Werkzeugmaschine betriebene Werkzeug (beispielsweise eine Bohrkrone oder ein Sägeblatt) zu kühlen. Zum anderen wird das zugeführte Wasser dazu verwendet, um Abrieb in Form von Staub und/oder Gesteinsbrocken aus bzw. von dem Werkzeug zu spülen. Ohne eine entsprechende Kühlung und Spülung der Werkzeugmaschine sowie des Werkzeugs würden diese in Verwendung binnen kürzester Zeit beschädigt werden.

Es sind Wasserversorgungsvorrichtungen im Stand der Technik bekannt, die einen Wasserbehälter zum Aufnehmen von Wasser enthalten und mittels einer integrierten Pumpe dieses Wasser über ein Leitungssystem an eine angeschlossene Werkzeugmaschine leiten, um die Werkzeugmaschine und dessen Komponenten zu kühlen und/oder zu spülen.

Die integrierten Pumpen sind häufig in Form von Tauchpumpen oder selbstansaugenden Pumpen gestaltet.

Die Verwendung einer derartigen Wasserversorgungsvorrichtung stellt bei Umgebungstemperaturen unter dem Gefrierpunkt der jeweils zu pumpenden Flüssigkeit (0°C bei Wasser) ein gravierendes Problem dar. Unterlässt ein Anwender eine ordnungsgemäße Entleerung des Wassers aus der Wasserversorgungsvorrichtung nach Beenden der Verwendung der Wasserversorgungsvorrichtung, so können durch das Gefrieren von Restwasser bzw. durch die Bildung von Eis Beschädigungen in der Wasserversorgungsvorrichtung entstehen. Insbesondere kann hierbei die Wasserpumpe beschädigt werden. Dabei ist nicht nur die Bildung von Eis unmittelbar in der Wasserpumpe, sondern auch das Pumpen von Eisbrocken, welche sich in dem Wasser des Wasserbehälters bereits gebildet haben, zu vermeiden.

Ein ordnungsgemäßes Entleeren der Wasserversorgungsvorrichtung und speziell der Wasserpumpe nach deren Verwendung ist jedoch häufig eine umständliche sowie zeitraubende Angelegenheit und wird daher aus Bequemlichkeit und/oder Zeitmangel vom Anwender unterlassen.

Aufgabe der vorliegenden Erfindung ist es daher, das vorstehend genannte Problem zu lösen und insbesondere eine Wasserversorgungsvorrichtung zur Versorgung einer Werkzeugmaschine mit Wasser enthaltend eine Wasserpumpe, eine Speichereinrichtung zum Speichern von Wasser, eine Ansaugleitung zum Leiten von Wasser aus der Speichereinrichtung zu der Wasserpumpe, eine Versorgungsleitung zum Leiten von Wasser von der Wasserpumpe zu der Werkzeugmaschine und eine Ventileinrichtung, welche reversibel mindestens in eine erste Position und eine zweite Position einstellbar ist, zur Verfügung zu stellen, mit der ein einfaches sowie automatisches Selbstentleeren der Wasserversorgungsvorrichtung sowie der Wasserpumpe möglich ist und so eine Beschädigung der Wasserpumpe durch einfrierendes Wasser bzw. Eis verhindert wird.

Diese Aufgabe wird erfindungsgemäss durch den Gegenstand des unabhängigen Anspruchs 1, 8 und 9 gelöst. Weitere Ausführungsformen des erfindungsgemässen Gegenstands finden sich in den abhängigen Unteransprüchen.

Es wird eine Wasserversorgungsvorrichtung bereitgestellt zur Versorgung einer Werkzeugmaschine mit Wasser, enthaltend eine Wasserpumpe, eine Speichereinrichtung zum Speichern von Wasser, eine Ansaugleitung zum Leiten von Wasser aus der Speichereinrichtung zu der Wasserpumpe, eine Versorgungsleitung zum Leiten von Wasser von der Wasserpumpe zu der Werkzeugmaschine und eine Ventileinrichtung, welche reversibel mindestens in eine erste Position und eine zweite Position einstellbar ist.

Erfindungsgemäss ist die Wasserpumpe in einer Richtung hinter der Ventileinrichtung positioniert und eine erste Verbindungsleitung zum Leiten von Wasser von der Ansaugleitung zu der Ventileinrichtung, eine zweite Verbindungsleitung zum Leiten von Wasser von der Versorgungsleitung zu der Ventileinrichtung sowie eine Rückführleitung zum Leiten von Wasser von der Ventileinrichtung zu dem Wasserspeicher ist vorgesehen, wobei in der ersten Position die erste Verbindungsleitung, die zweite Verbindungsleitung sowie die Rückführleitung so miteinander in Verbindung stehen, dass Wasser von der Wasserpumpe, von der ersten Verbindungsleitung, von der zweiten Verbindungsleitung, von wenigstens einem Teil der Ansaugleitung und von wenigstens einem Teil der Versorgungsleitung in die Rückführleitung förderbar ist und wobei in der zweiten Position die erste Verbindungsleitung, die zweite Verbindungsleitung sowie die Rückführleitung nicht miteinander verbunden sind. Hierdurch kann auf effektive Art und Weise ein Entleeren der Wasserversorgungsvorrichtung sowie der Wasserpumpe ermöglicht werden und folglich eine Beschädigung der Wasserpumpe durch einfrierendes Wasser bzw. Eis verhindert werden.

Gemäß einer weiteren vorteilhaften Ausführungsform kann vorgesehen sein, dass die Ventileinrichtung als selbstrückstellendes 3/2-Wegeventil ausgestaltet ist. Hierdurch kann ein reversibles Verbinden und erneutes Trennen der ersten Verbindungsleitung, der zweiten Verbindungsleitung sowie der Rückführleitung miteinander effizient gestaltet werden.

Um eine automatische sowie von einer ersten elektrischen Energiequelle unabhängige Bedienung des selbstrückstellenden 3/2-Wegeventils zu ermöglichen, kann es entsprechend einer weiteren vorteilhaften Ausführungsform möglich sein, dass das selbstrückstellende 3/2-Wegeventil durch wenigstens ein Federelement von der zweiten Position in die erste Position bewegbar ist.

Um eine automatische sowie von einer ersten elektrischen Energiequelle abhängige Bedienung des selbstrückstellenden 3/2-Wegeventils zu ermöglichen, kann es entsprechend einer weiteren vorteilhaften Ausführungsform möglich sein" dass das selbstrückstellende 3/2-Wegeventil durch wenigstens eine elektrische Betätigung mit einer magnetischen Spule von der zweiten Position in die erste Position bewegbar ist.

Entsprechend einer weiteren vorteilhaften Ausführungsform kann vorgesehen sein, dass die Ventileinrichtung von der zweiten Position in die erste Position wechselt, wenn die Ventileinrichtung oder die Wasserversorgungsvorrichtung von einer ersten Energiequelle getrennt wird, wobei die erste Energiequelle in Form einer Netzstromversorgung oder wenigstens eines Akkumulators gestaltet ist. Hierdurch kann ein automatisches Entleeren der Wasserpumpe sowie der Leitungen sichergestellt werden, wenn die Wasserversorgungsvorrichtung von der ersten Energiequelle absichtlich oder unabsichtlich getrennt wird.

Um eine aktive Selbstentleerung der Wasserpumpe stets zu gewährleisten, kann vorgesehen sein, dass eine zweite Energiequelle zur Versorgung der Wasserpumpe mit elektrischer Energie vorgesehen ist, wenn die Wasserpumpe von der ersten Energiequelle getrennt ist.

Gemäß einer weiteren vorteilhaften Ausführungsform kann vorgesehen sein, dass die Ventileinrichtung von der zweiten Position in die erste Position wechselt, wenn die Wasserversorgungsvorrichtung in einen Deaktivierungsmodus eingestellt wird. Hierdurch kann sichergestellt werden, dass eine Selbstentleerung der Wasserpumpe sowie der Leitungen vorgenommen wird, wenn die Wasserversorgungsvorrichtung ausgeschaltet wird, d.h. sich in dem Deaktivierungsmodus befindet.

Des Weiteren wird eine Ventileinrichtung nach wenigstens einer der vorstehend beschriebenen Ausführungsformen zur Verwendung in einer Wasserversorgungsvorrichtung bereitgestellt.

Darüber hinaus wird ein Verfahren zum Steuern einer Wasserversorgungsvorrichtung nach wenigstens einer der vorstehend beschriebenen Ausführungsformen bereitgestellt, mit den Schritten:
- Einstellen der Wasserversorgungsvorrichtung von einem Aktivierungsmodus in einen Deaktivierungsmodus;
- Einstellen einer Wasserpumpe von einem Aktivierungsmodus in einen Deaktivierungsmodus;
- Einstellen einer Ventileinrichtung von der zweiten Position in die erste Position;
- Einstellen der Wasserpumpe von dem Deaktivierungsmodus in den Aktivierungsmodus nach Ablauf einer ersten vorbestimmten Zeitdauer; und
- Einstellen der Wasserpumpe von einem Aktivierungsmodus in einen Deaktivierungsmodus nach Ablauf einer zweiten vorbestimmten Zeitdauer.

Hierdurch kann eine aktive Selbstentleerung der Wasserpumpe nach einem Abschalten der Wasserversorgungsvorrichtung (Deaktivierungsmodus der Wasserversorgungsvorrichtung) sichergestellt werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1a: eine schematische Ansicht einer erfindungsgemäßen Wasserversorgungsvorrichtung gemäß einer ersten Ausführungsform verbunden mit einer Werkzeugmaschine und einer Ventileinrichtung in einer ersten Position;
- Fig. 1b: eine schematische Ansicht der erfindungsgemäßen Wasserversorgungsvorrichtung gemäß der ersten Ausführungsform verbunden mit einer Werkzeugmaschine und einer Ventileinrichtung in einer zweiten Position;
- Fig. 2: eine schematische Ansicht der Wasserversorgungsvorrichtung gemäß einer zweiten Ausführungsform verbunden mit einer Werkzeugmaschine;
- Fig. 3: eine schematische Ansicht der Wasserversorgungsvorrichtung gemäß einer dritten Ausführungsform verbunden mit einer Werkzeugmaschine;
- Fig. 4: eine schematische Ansicht der Wasserversorgungsvorrichtung gemäß einer vierten Ausführungsform verbunden mit einer Werkzeugmaschine;
- Fig. 5a: eine schematische Ansicht der Wasserversorgungsvorrichtung gemäß der dritten Ausführungsform mit einer Ventileinrichtung in einer ersten Position, welche von einer ersten elektrischen Energiequelle getrennt ist und bei der ein Geräteschalter der Wasserversorgungsvorrichtung in einer Off-Stellung (Deaktivierungsmodus) oder in einer On-Stellung (Aktivierungsmodus) steht;
- Fig. 5b: eine schematische Ansicht der erfindungsgemäßen Wasserversorgungsvorrichtung gemäß der dritten Ausführungsform mit der Ventileinrichtung in einer zweiten Position, welche mit der ersten elektrischen Energiequelle verbunden ist und bei der der Geräteschalter der Wasserversorgungsvorrichtung in der Off-Stellung (Deaktivierungsmodus) oder in der On-Stellung (Aktivierungsmodus) steht;
- Fig. 6a: eine schematische Ansicht der erfindungsgemäßen Wasserversorgungsvorrichtung gemäß der dritten Ausführungsform mit der Ventileinrichtung in der ersten Position, welche mit der ersten elektrischen Energiequelle verbunden ist und bei der der Geräteschalter der Wasserversorgungsvorrichtung in der Off-Stellung (Deaktivierungsmodus) steht;
- Fig. 6b: eine schematische Ansicht der erfindungsgemäßen Wasserversorgungsvorrichtung gemäß der dritten Ausführungsform mit der Ventileinrichtung in der zweiten Position, welche mit der ersten elektrischen Energiequelle verbunden ist und bei der der Geräteschalter der Wasserversorgungsvorrichtung in der On-Stellung (Aktivierungsmodus) steht;
- Fig. 6c: eine schematische Ansicht der Wasserversorgungsvorrichtung gemäß der dritten Ausführungsform mit der Ventileinrichtung in der ersten Position, welche von der ersten elektrischen Energiequelle getrennt ist und bei der der Geräteschalter der Wasserversorgungsvorrichtung in der Off-Stellung (Deaktivierungsmodus) oder in der On-Stellung (Aktivierungsmodus) steht;
- Fig. 7: ein erstes Ablaufdiagramm in Bezug auf ein erfindungsgemäßes Verfahren; und
- Fig. 8: ein zweites Ablaufdiagramm in Bezug auf das erfindungsgemäße Verfahren.

### Ausführungsbeispiel:

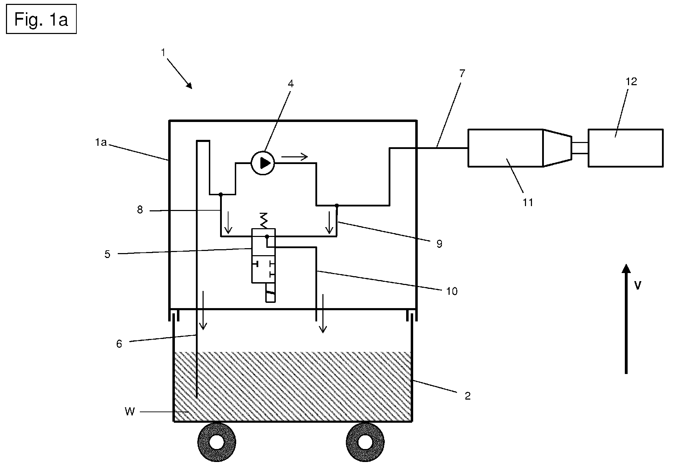

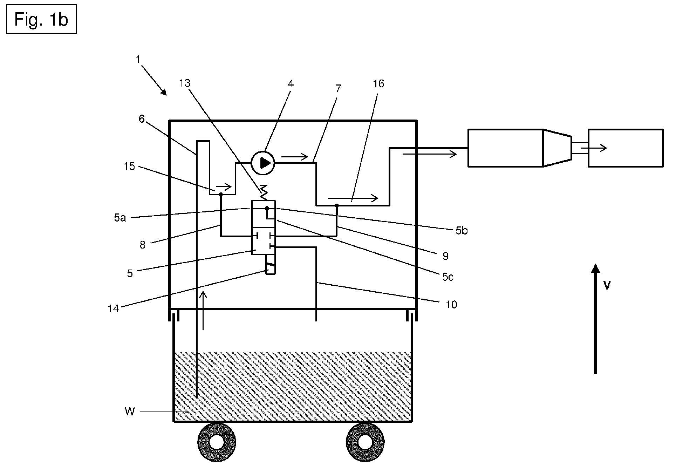

Fig. 1 zeigte eine schematische Ansicht einer erfindungsgemäßen Wasserversorgungsvorrichtung 1 gemäß einer ersten Ausführungsform.

Die Wasserversorgungsvorrichtung 1 enthält einen Gerätekopf 1a und eine Speichereinrichtung 3 zum Speichern von Wasser W. Die Speichereinrichtung 2 zum Speichern von Wasser W kann auch als Wasserspeicher bezeichnet werden.

Der Gerätekopf 2 enthält im Wesentlichen eine Wasserpumpe 4, eine Ventileinrichtung 5, eine Ansaugleitung 6, eine Versorgungsleitung 7, eine erste Verbindungsleitung 8, eine zweite Verbindungsleitung 9 und eine Rückführleitung 10.

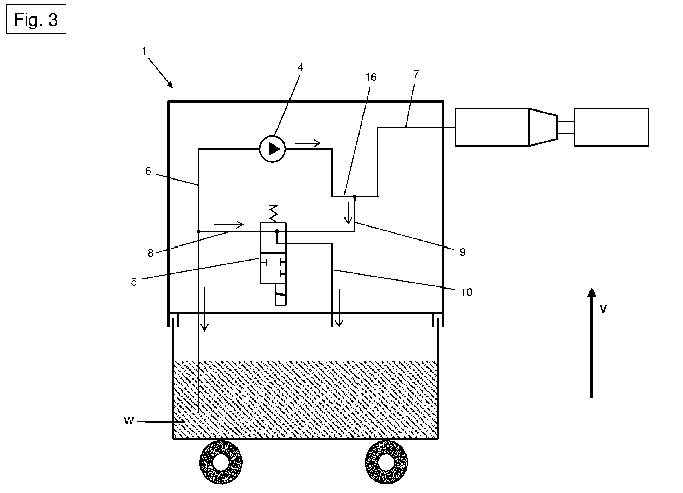

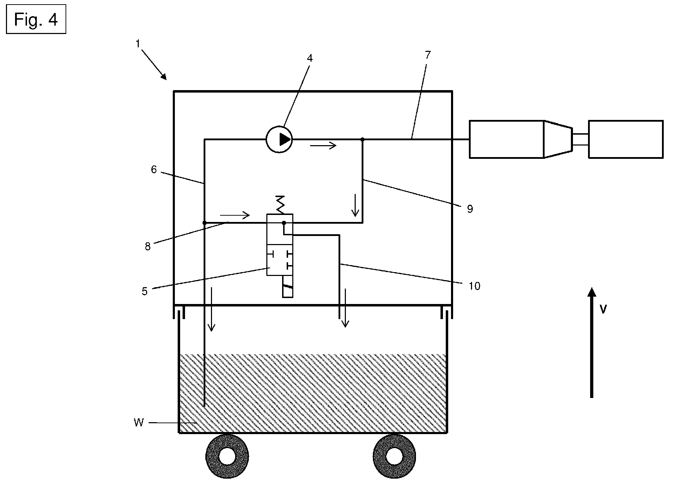

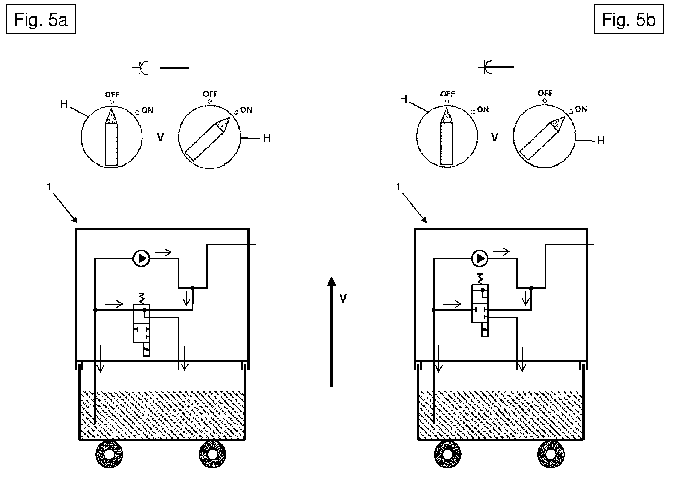

Die Wasserpumpe 4 ist in Form einer selbstansaugenden Pumpe gestaltet und mit der Ansaugleitung 6 sowie der Versorgungsleitung 7 verbunden. Die Ansaugleitung 6 erstreckt sich von dem Wasserspeicher 2 zu der Wasserpumpe 4. Die Versorgungsleitung 7 erstreckt sich von der Wasserpumpe 4 zu einer Werkzeugmaschine 11 und einem Werkzeug 12. Durch die Ansaugleitung 6 kann Wasser W von dem Wasserspeicher 2 zu der Wasserpumpe 4 gepumpt werden. Durch die Versorgungsleitung 7 kann Wasser von der Wasserpumpe 4 zu einer Werkzeugmaschine 11 und einem mit der Werkzeugmaschine 11 verbunden Werkzeug 12 gepumpt werden. In Fig. 1, 2, 3 und 4 ist die Werkzeugmaschine 11 als Kernbohrmaschine und das Werkzeug 12 als Bohrkrone dargestellt. In den Fig. 5a bis 6c ist weder die Werkzeugmaschine 11 noch das Werkzeug 12 dargestellt.

Die Ventileinrichtung 5 ist als selbstrückstellendes 3/2-Wegemagnetventil ausgestaltet und enthält ein Federelement 13 sowie eine elektrische Betätigung 14 mit einer magnetischen Spule 15. Das selbstrückstellende 3/2-Wegemagnetventil 5 beinhaltet dabei drei Anschlüsse 5a, 5b, 5c und zwei Schaltstellungen. Die erste Verbindungsleitung 8 erstreckt sich von der Ansaugleitung 6 zu der Ventileinrichtung 5 und die zweite Verbindungsleitung 9 erstreckt sich von der Versorgungsleitung 7 zu der Ventileinrichtung 5. Die Rückführleitung 10 erstreckt sich von der Ventileinrichtung 5 zu dem Wasserspeicher 2. Gemäß der ersten Ausführungsform der Wasserversorgungsvorrichtung 1 ist die erste Verbindungsleitung 8 an einer Stelle mit der Ansaugleitung 6 verbunden, an der die Ansaugleitung 6 eine Senke 15 bildet (vgl. Fig. 1a, 1b). Demgemäß ist die zweite Verbindungsleitung 9 an einer Stelle mit der Versorgungsleitung 7 verbunden, an der die Versorgungsleitung 7 eine Senke 16 bildet (vgl. Fig. 1a, 1b). Die jeweilige Senke 15, 16 ist durch eine entgegen der Richtung V tiefste Stelle in der Ansaugleitung 6 bzw. in der Versorgungsleitung 7 gebildet.

Die Ventileinrichtung 5 kann reversibel in eine erste Position und in eine zweite Position eingestellt werden. In Fig. 1a, 2, 3 und 4 ist die als 3/2-Wegemagnetventil ausgestaltete Ventileinrichtung 5 in der ersten Position eingestellt. In Fig. 1b, 5b und 6b ist die als 3/2-Wegemagnetventil ausgestaltete Ventileinrichtung 5 in der zweiten Position eingestellt.

In der ersten Position sind die erste Verbindungsleitung 8 und die zweite Verbindungsleitung 9 mit der Rückführleitung 10 so verbunden, dass Wasser, welches sich in der ersten oder zweiten Verbindungsleitung 8, 9 befindet, in die Rückführleitung 10 strömen kann, um über die Rückführleitung in den Wasserspeicher 2 zu gelangen. Die Ventileinrichtung 5 enthält hierzu ein (nicht gezeigtes) innenliegendes Leitungssystem, durch welches die erste und die zweite Verbindungsleitung 8, 9 mit der Rückführleitung 10 verbunden sind. Mit Hilfe des Federelements 13 wird die Ventileinrichtung in der ersten Position gehalten.

In der zweiten Position sind die erste Verbindungsleitung 8 und die zweite Verbindungsleitung 9 nicht mit der Rückführleitung 10 verbunden, sodass kein Wasser von der ersten oder der zweiten Verbindungsleitung 8, 9 in die Rückführleitung 10 gelangen kann. Mit Hilfe der elektrischen Betätigung 14 wird die Ventileinrichtung 5 von der ersten Position in die zweite Position gebracht, d.h. die Ventileinrichtung 5 wird von der elektrischen Betätigung 14 in Richtung V bewegt. Die elektrische Betätigung 14 ist dabei so gestaltet, dass diese eine elektrische Spannung benötigt, damit die Ventileinrichtung 5 von der ersten Position in die zweite Position gebracht werden kann. Wenn keine derartige elektrische Spannung an der elektrischen Betätigung 14 anliegt, kann die Ventileinrichtung 5 nicht von der ersten Position in die zweite Position gebracht werden. Solange eine elektrische Spannung an der elektrischen Betätigung 14 anliegt, verbleibt die Ventileinrichtung in der zweiten Position. Ohne eine elektrische Spannung wird die Ventileinrichtung durch das Federelement (13) wieder in die erste Position gebracht.

Die erste Position ist somit eine Ausgangs- oder Ruheposition der Ventileinrichtung 5.

Wie in den Fig. 1a bis 7 dargestellt, ist die Wasserpumpe 4 an einer höheren Stelle in der Wasserversorgungsvorrichtung 1 positioniert als die Ventileinrichtung 5. D.h. die Wasserpumpe 4 ist in Richtung V hinter der Ventileinrichtung 5 positioniert. Hierdurch kann mit Hilfe der Schwerkraft das Wasser aus der Wasserpumpe 4 über die Verbindungsleitungen 8, 9 in die Ventileinrichtung 5 fließen, wenn die Wasserpumpe 4 das Wasser nicht anpumpt.

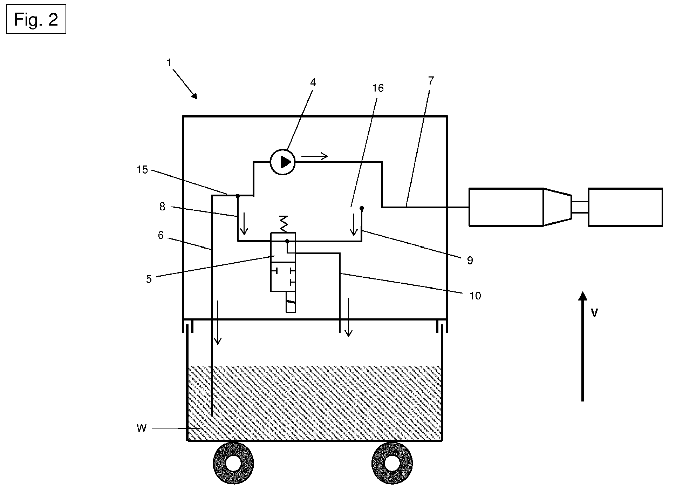

Wie entsprechend in den jeweiligen Fig. 2 bis 4 gezeigt, können die Ansaugleitung 6 und/oder die Versorgungsleitung 7 auch ohne Senken 15, 16 ausgestaltet sein und mit den ersten und zweiten Verbindungsleitungen 8, 9 verbunden sein. Die erste Verbindungsleitung 8 ist dabei jedoch stets so mit der Ansaugleitung 6 verbunden, dass ein gewisses Gefälle in der ersten Verbindungsleitung 8 zu der Ventileinrichtung 5 besteht. Demgemäß ist die zweite Verbindungsleitung 9 stets so mit der Versorgungsleitung 7 verbunden, dass ein gewisses Gefälle in der zweiten Verbindungsleitung 9 zu der Ventileinrichtung 5 besteht. Durch das Gefälle kann das Wasser mit Hilfe der Schwerkraft von der ersten und zweiten Verbindungsleitung 8, 9 zu der Ventileinrichtung 5 und schließlich in die Rückführleitung 10 gelangen.

In Fig. 5a und 5b ist die Wasserversorgungsvorrichtung 1 ohne Werkzeugmaschine 11 dargestellt. Die Wasserversorgungsvorrichtung 1 verfügt über eine erste Energiequelle, welche die Wasserversorgungsvorrichtung 1 mit elektrischem Strom versorgt und welche in Form eines Netzstromkabels und/oder in Form wenigstens eines Akkumulators gestaltet ist. In den Figuren ist die erste Energiequelle nicht gezeigt.

Des Weiteren enthält die Wasserversorgungsvorrichtung 1 eine Betätigungseinrichtung, mit der die einzelnen Funktionen der Wasserversorgungsvorrichtung 1 gesteuert werden können. Darüber hinaus lässt sich mit Hilfe der Betätigungseinrichtung die Wasserversorgungsvorrichtung 1 reversibel von einem Deaktivierungsmodus in einen Aktivierungsmodus einstellen. In dem Deaktivierungsmodus ist die Wasserversorgungsvorrichtung 1 ausgeschaltet und funktionsunfähig, wobei jedoch weiterhin die Wasserversorgungsvorrichtung mit elektrischem Strom versorgt wird. In dem Aktivierungsmodus ist die Wasserversorgungsvorrichtung eingeschaltet und funktionsfähig, wobei die Wasserversorgungsvorrichtung 1 mit elektrischem Strom versorgt wird. Die Betätigungseinrichtung enthält im Wesentlichen einen Hauptschalter H. Der Hauptschalter H ist wahlweise in einer "Off-Stellung" oder in einer "On-Stellung" einstellbar. In der Off-Stellung des Hauptschalters H ist die Wasserversorgungsvorrichtung 1 in dem Deaktivierungsmodus. In der On-Stellung des Hauptschalters H ist die Wasserversorgungsvorrichtung 1 in dem Aktivierungsmodus. Die Betätigungseinrichtung ist nicht in den Figuren dargestellt. Es ist lediglich der Hauptschalter H der Betätigungseinrichtung stilistisch in den Fig. 5a bis 8 gezeigt.

In den Fig. 5a und 5b ist eine erste Variante des Ablaufs der rein passiven Selbstentleerung der Wasserpumpe 4 in der erfindungsgemäßen Wasserversorgungsvorrichtung 1 gezeigt.

Fig. 5a zeigt die Wasserversorgungsvorrichtung 1 in einem Zustand, in dem die Wasserversorgungsvorrichtung 1 von der ersten Energiequelle getrennt ist und der Hauptschalter H in der "Off-Stellung" oder in der "On-Stellung" eingestellt ist. Das "V" zwischen den beiden Darstellungen des Hauptschalters bedeute "oder" und bezieht sich darauf, dass der Hauptschalter in der entsprechenden Figur entweder in der "Off-Stellung" oder in der "On-Stellung" eingestellt ist. In diesem Zustand (d.h. Wasserversorgungsvorrichtung 1 von der ersten Energiequelle getrennt ist und der Hauptschalter H in der "Off-Stellung" oder in der "On-Stellung") befindet sich die Ventileinrichtung 5 in der ersten Position, d.h. die erste Verbindungsleitung 8 und die zweite Verbindungsleitung 9 mit der Rückführleitung 10 verbunden, damit Wasser, welches sich in der ersten oder zweiten Verbindungsleitung 8, 9 befindet, in die Rückführleitung 10 strömen kann, um über die Rückführleitung 10 in den Wasserspeicher 2 zu gelangen. Mit anderen Worten: wenn die Wasserversorgungsvorrichtung 1 von der ersten Energiequelle getrennt wurde, wechselt die Ventileinrichtung in die erste Position, sodass die Wasserpumpe 4 sich selbst entleeren kann. Dies ist unabhängig von der Stellung (Off oder On) des Hauptschalters H.

Fig. 5b zeigt die Wasserversorgungsvorrichtung 1 in einem Zustand, in dem die Wasserversorgungsvorrichtung 1 mit der ersten Energiequelle verbunden ist und der Hauptschalter H in der "Off-Stellung" oder in der "On-Stellung" eingestellt ist. In diesem Zustand befindet sich die Ventileinrichtung 5 in der zweiten Position, in der die erste Verbindungsleitung 8 und die zweite Verbindungsleitung 9 nicht mit der Rückführleitung 10 verbunden sind, sodass kein Wasser von der ersten oder der zweiten Verbindungsleitung 8, 9 in die Rückführleitung 10 gelangen kann. Mit anderen Worten: wenn die Wasserversorgungsvorrichtung 1 mit der ersten Energiequelle verbunden ist, befindet sich die Ventileinrichtung 5 in der zweiten Position, sodass die Wasserpumpe 4 Wasser von dem Wasserspeicher 2 durch die Ansaugleitung 6 und Versorgungsleitung 7 zu der Werkzeugmaschine 11 pumpen kann. Dies ist unabhängig von der Stellung (Off oder On) des Hauptschalters H.

Gemäß der ersten Variante des Ablaufs der rein passiven Selbstentleerung der Wasserpumpe 4 wird nur dann eine passive bzw. automatische Selbstentleerung der Wasserpumpe 4 vorgenommen, wenn die Wasserversorgungvorrichtung 1 von der ersten Energiequelle getrennt wird.

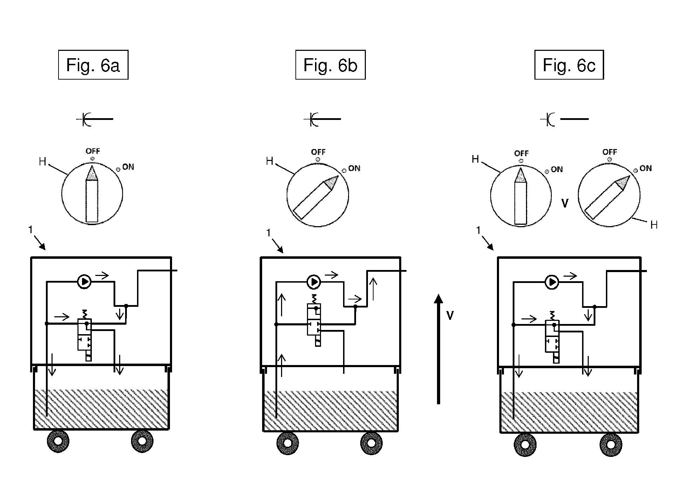

In den Fig. 6a, 6b und 6c ist eine zweite Variante des Ablaufs der rein passiven Selbstentleerung der Wasserpumpe 4 in der erfindungsgemäßen Wasserversorgungsvorrichtung 1 gezeigt.

Fig. 6a zeigt die Wasserversorgungsvorrichtung 1 in einem Zustand, in dem die Wasserversorgungsvorrichtung 1 mit der ersten Energiequelle verbunden ist und der Hauptschalter H in der "Off-Stellung" eingestellt ist. In diesem Zustand befindet sich die Ventileinrichtung 5 in der ersten Position, d.h. die erste Verbindungsleitung 8 und die zweite Verbindungsleitung 9 mit der Rückführleitung 10 verbunden, damit Wasser, welches sich in der ersten oder zweiten Verbindungsleitung 8, 9 befindet, in die Rückführleitung 10 strömen kann, um über die Rückführleitung 10 in den Wasserspeicher 2 zu gelangen. Mit anderen Worten: wenn die Wasserversorgungsvorrichtung 1 von der ersten Energiequelle verbunden und der Hauptschalter H in der Off-Stellung eingestellt ist, befindet sich die Ventileinrichtung 5 in die erste Position, sodass die Wasserpumpe 4 sich selbst entleeren kann.

Fig. 6b zeigt die Wasserversorgungsvorrichtung 1 in einem Zustand, in dem die Wasserversorgungsvorrichtung 1 mit der ersten Energiequelle verbunden ist und der Hauptschalter H in der "On-Stellung" eingestellt ist. In diesem Zustand befindet sich die Ventileinrichtung 5 in der zweiten Position, in der die erste Verbindungsleitung 8 und die zweite Verbindungsleitung 9 nicht mit der Rückführleitung 10 verbunden sind, sodass kein Wasser von der ersten oder der zweiten Verbindungsleitung 8, 9 in die Rückführleitung 10 gelangen kann.

Mit anderen Worten: wenn die Wasserversorgungsvorrichtung 1 mit der ersten Energiequelle verbunden und der Hauptschalter H in der On-Stellung eingestellt ist, befindet sich die Ventileinrichtung 5 in der zweiten Position, sodass die Wasserpumpe 4 Wasser von dem Wasserspeicher 2 durch die Ansaugleitung 6 und Versorgungsleitung 7 zu der Werkzeugmaschine 11 pumpen kann.

Fig. 6c zeigt die Wasserversorgungsvorrichtung 1 in einem Zustand, in dem die Wasserversorgungsvorrichtung 1 von der ersten Energiequelle getrennt ist und der Hauptschalter H in der "Off-Stellung" oder in der "On-Stellung" eingestellt ist. In diesem Zustand befindet sich die Ventileinrichtung 5 in der ersten Position, d.h. die erste Verbindungsleitung 8 und die zweite Verbindungsleitung 9 mit der Rückführleitung 10 verbunden, damit Wasser, welches sich in der ersten oder zweiten Verbindungsleitung 8, 9 befindet, in die Rückführleitung 10 strömen kann, um über die Rückführleitung 10 in den Wasserspeicher 2 zu gelangen. Mit anderen Worten: wenn die Wasserversorgungsvorrichtung 1 von der ersten Energiequelle getrennt wurde, wechselt die Ventileinrichtung 5 in die erste Position, sodass die Wasserpumpe 4 sich selbst entleeren kann. Dies ist unabhängig von der Stellung (Off oder On) des Hauptschalters H.

Gemäß der zweiten Variante des Ablaufs der rein passiven Selbstentleerung der Wasserpumpe 4 wird eine passive bzw. automatische Selbstentleerung der Wasserpumpe 4 vorgenommen, wenn die Wasserversorgungvorrichtung 1 von der ersten Energiequelle getrennt wird oder der Hauptschalter H sich in der Off-Stellung befindet.

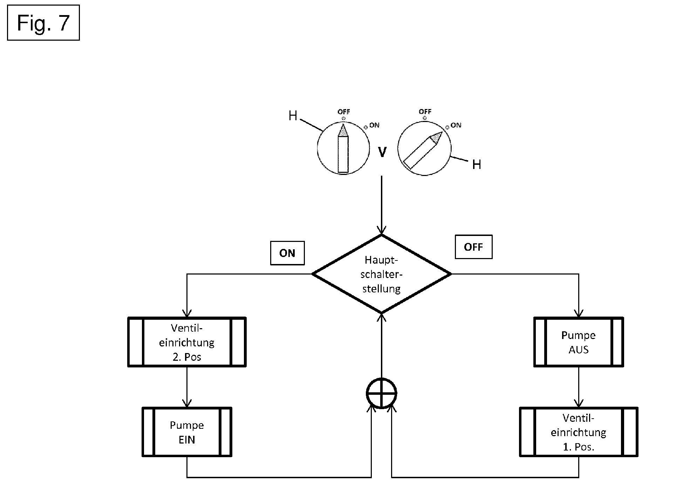

Fig. 7 zeigt ein Ablaufdiagramm der zweiten Variante des Ablaufs der rein passiven Selbstentleerung der Wasserpumpe 4.

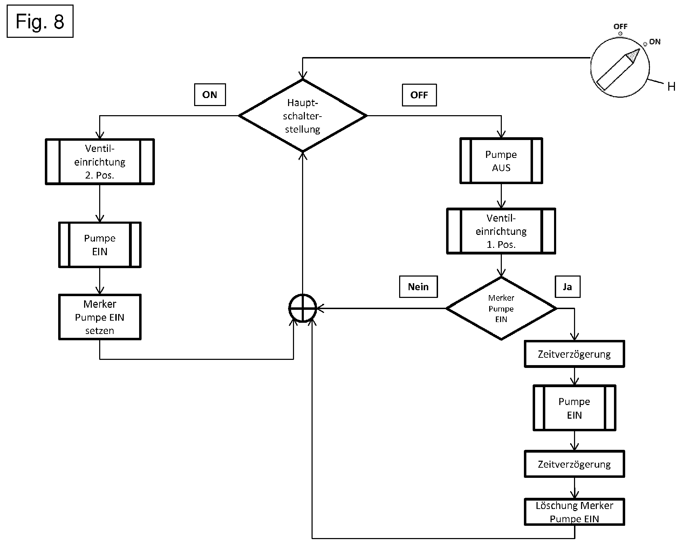

In den Fig. 8 ist eine dritte Variante des Ablaufs der rein passiven Selbstentleerung der Wasserpumpe 4 in der erfindungsgemäßen Wasserversorgungsvorrichtung 1 dargestellt. Bezüglich der Stellung (Off oder On) des Hauptschalters H sowie der Verbindung oder Trennung der ersten Energiequelle ist die dritte Variante identisch mit der zweiten Variante (vgl. Fig. 6a, 6b und 6c). Der Ablauf in Fig. 8 ist ähnlich zu dem Ablauf in Fig. 7.

Bei dem Ablauf in Fig. 8 wird zunächst der Hauptschalter H in die On-Stellung geschaltet, wodurch die Ventileinrichtung 5 in die 2. Position wechselt und die Wasserpumpe 4 aktiviert (eingeschaltet) wird. Danach wird ein Merker "Wasserpumpe EIN" gesetzt.

Wenn der Hauptschalter H in die Off-Stellung geschaltet wird, wechselt die Ventileinrichtung 5 in die 1. Position und die Wasserpumpe 4 wird deaktiviert (ausgeschaltet). Eine passive Selbstentleerung der Wasserpumpe 4 findet statt, wie vorstehend beschrieben. Anschließend erfolgt eine Abfrage, ob ein Merker "Wasserpumpe EIN" vorhanden ist.

Wenn detektiert wird, dass ein Merker "Wasserpumpe EIN" vorhanden ist, erfolgt eine Zeitverzögerung, um eine passive Selbstentleerung der Wasserpumpe 4 zu ermöglichen. Anschließend wird die Wasserpumpe 4 für eine definierte Zeitdauer wieder aktiviert (eingeschaltet), wodurch sich die Wasserpumpe 4 selbst leer pumpt. Hierbei wird Luft von der Wasserpumpe 4 angesaugt und das noch vorhandene Wasser wird aus der Wasserpumpe 4 gepumpt. Anschließend wird der Merker "Wasserpumpe EIN" gelöscht.

Gemäß einer vierten Variante des Ablaufs der rein passiven Selbstentleerung der Wasserpumpe 4 in der erfindungsgemäßen Wasserversorgungsvorrichtung 1 ist eine zusätzliche, d.h. zweite Energiequelle zur Versorgung der Wasserpumpe 4 mit elektrischer Spannung vorgesehen. Die zweite Energiequelle ist in Form eines Akkumulators ausgestaltet. Alternativ kann die zweite Energiequelle auch in Form einer Batterie und/oder Kondensator ausgestaltet sein. Die zweite Energiequelle ist nicht in den Figuren dargestellt.

Mit Hilfe der zweiten Energiequelle wird die Wasserpumpe 4 separat mit Energie versorgt, so dass auch bei einer Trennung der Wasserversorgungsvorrichtung 1 von der ersten Energiequelle die Wasserpumpe 4 weiterhin aktiviert bleibt. Hierdurch kann sichergestellt werden, dass bei einem Wechsel der Ventileinrichtung 5 in die erste Position, welche durch die Trennung der Wasserversorgungsvorrichtung 1 von der ersten Energiequelle erzeugt wird (wie vorstehend beschrieben), sich die Wasserpumpe 4 selbstständig entleeren kann.

## Patentansprüche

1. Wasserversorgungsvorrichtung (1) zur Versorgung einer Werkzeugmaschine (11) mit Wasser, enthaltend
- eine Wasserpumpe (4);
- eine Speichereinrichtung (2) zum Speichern von Wasser;
- eine Ansaugleitung (6) zum Leiten von Wasser aus der Speichereinrichtung (2) zu der Wasserpumpe (4);
- eine Versorgungsleitung (7) zum Leiten von Wasser von der Wasserpumpe (4) zu der Werkzeugmaschine (11); und
- eine Ventileinrichtung (5), welche reversibel mindestens in eine erste Position und eine zweite Position einstellbar ist
**dadurch gekennzeichnet, dass** die Wasserpumpe (4) in einer Richtung (R) hinter der Ventileinrichtung (5) positioniert ist und
eine erste Verbindungsleitung (8) zum Leiten von Wasser von der Ansaugleitung (6) zu der Ventileinrichtung (5), eine zweite Verbindungsleitung (9) zum Leiten von Wasser von der Versorgungsleitung (7) zu der Ventileinrichtung (5) sowie eine Rückführleitung (10) zum Leiten von Wasser von der Ventileinrichtung (5) zu dem Wasserspeicher (2) vorgesehen ist, und
wobei in der ersten Position die erste Verbindungsleitung (8), die zweite Verbindungsleitung (9) sowie die Rückführleitung (10) so miteinander in Verbindung stehen, dass Wasser von der Wasserpumpe (4), von der ersten Verbindungsleitung (8), von der zweiten Verbindungsleitung (9), von wenigstens einem Teil der Ansaugleitung (6) und von wenigstens einem Teil der Versorgungsleitung (7) in die Rückführleitung (10) förderbar ist und wobei in der zweiten Position die erste Verbindungsleitung (8), die zweite Verbindungsleitung (9) sowie die Rückführleitung (10) nicht miteinander verbunden sind.

2. Wasserversorgungsvorrichtung (1) nach Anspruch 1,
**dadurch gekennzeichnet, dass** die Ventileinrichtung (5) als selbstrückstellendes 3/2-Wegeventil ausgestaltet ist.

3. Wasserversorgungsvorrichtung (1) nach Anspruch 2,
**dadurch gekennzeichnet, dass** das selbstrückstellendes 3/2-Wegeventil (5) durch wenigstens ein Federelement (13) von der zweiten Position in die erste Position bewegbar ist.

4. Wasserversorgungsvorrichtung (1) nach Anspruch 2 oder 3,
**dadurch gekennzeichnet, dass** das 3/2-Wegeventil (5) durch wenigstens eine elektrische Betätigung mit einer magnetischen Spule (15) von der zweiten Position in die erste Position bewegbar ist.

5. Wasserversorgungsvorrichtung (1) wenigstens einem der Ansprüche 1 bis 4,
**dadurch gekennzeichnet, dass** die Ventileinrichtung (5) von der zweiten Position in die erste Position wechselt, wenn die Ventileinrichtung (5) oder die Wasserversorgungsvorrichtung (1) von einer ersten Energiequelle getrennt wird, wobei die erste Energiequelle in Form einer Netzstromversorgung oder wenigstens eines Akkumulators gestaltet ist.

6. Wasserversorgungsvorrichtung (1) nach Anspruch 5,
**dadurch gekennzeichnet, dass** eine zweite Energiequelle zur Versorgung der Wasserpumpe (4) mit elektrischer Energie vorgesehen ist, wenn die Wasserpumpe (4) von der ersten Energiequelle getrennt ist.

7. Wasserversorgungsvorrichtung (1) wenigstens einem der Ansprüche 1 bis 6,
**dadurch gekennzeichnet, dass** die Ventileinrichtung (5) von der zweiten Position in die erste Position wechselt, wenn die Wasserversorgungsvorrichtung (1) in einen Deaktivierungsmodus eingestellt wird.

8. Verwendung einer Ventileinrichtung (5) nach wenigstens einem der Ansprüche 1 bis 7 in einer Wasserversorgungsvorrichtung (1).

9. Verfahren zum Steuern einer Wasserversorgungsvorrichtung (1) nach wenigstens einem der Ansprüche 1 bis 7, mit den Schritten:
- Einstellen der Wasserversorgungsvorrichtung (1) von einem Aktivierungsmodus in einen Deaktivierungsmodus;
- Einstellen einer Wasserpumpe (4) von einem Aktivierungsmodus in einen Deaktivierungsmodus;
- Einstellen einer Ventileinrichtung (5) von der zweiten Position in die erste Position;
- Einstellen der Wasserpumpe (4) von dem Deaktivierungsmodus in den Aktivierungsmodus nach Ablauf einer ersten vorbestimmten Zeitdauer; und
- Einstellen der Wasserpumpe (4) von einem Aktivierungsmodus in einen Deaktivierungsmodus nach Ablauf einer zweiten vorbestimmten Zeitdauer.
